# EUROPEAN PATENT APPLICATION

(11) **EP 2 484 429 A1**
(43) Date of publication of application: **08.08.2012**
(21) Application number: 10820476.9
(22) Date of filing: 27.09.2010
(51) Int. Cl.: B01D 61/14, A23C 9/00, A23C 9/18, A23L 1/30

(54) **METHOD FOR SEPARATING SIALYLLACTOSE MATERIAL**

(30) Priority: 29.09.2009 JP 2009223849
(71) Applicant: Megmilk Snow Brand Co., Ltd., Sapporo-shi Hokkaido 0650043 (JP)
(72) Inventor: SOGAME, Hitomi, Sapporo-shi Hokkaido 065-0043 (JP); TOMIZAWA, Akira, Sapporo-shi Hokkaido 065-0043 (JP); SHIGEMATSU, Akinori, Sapporo-shi Hokkaido 065-0043 (JP); ITOH, Kotaro, Sapporo-shi Hokkaido 065-0043 (JP); KOJIMA, Kenji, Sapporo-shi Hokkaido 065-0043 (JP); YAMAZAKI, Ryu, Sapporo-shi Hokkaido 065-0043 (JP)
(74) Representative: MacLean, Martin Robert
(86) International application number: PCT/JP2010/066670
(87) International publication number: WO 2011/040361

(57) **Abstract**

A method for easily and efficiently separating a sialyllactose material from a milk material by exploiting the pH-dependent interactions between whey proteins and sialyllactose is disclosed. The method comprises concentrating a milk material at a pH of 5.2 or lower to obtain a concentrate, adjusting the pH of the concentrate to 5.5 or higher, and obtaining a low-molecular-weight fraction from the pH-adjusted concentrate. Since the method also allows separation of sialyllactose from lactose and minerals, sialyllactose may be obtained at high purity. The resulting sialyllactose material is highly useful for food, pharmaceutical, and other applications.

## Description

### TECHNICAL FIELD

The invention relates to a method of separating a sialyllactose material comprising concentrating a milk material (e.g., raw milk, skim milk, whey, or a liquid obtained by passing skim milk or whey through a microfiltration (MF) membrane) at a pH of 5.2 or lower to obtain a concentrate, adjusting the pH of the concentrate to 5.5 or higher, and obtaining a low-molecular-weight fraction from the pH-adjusted concentrate. The invention also relates to food, beverages, and the like that comprise the resulting sialyllactose material.

### BACKGROUND ART

Sialyllactose in which a sialic acid is bonded to a lactose is known to have a protective effect against virus and bacteria infections, and exhibit various physiological activities such as a growth-promoting activity for lactic acid bacteria. Therefore, sialyllactose has been used in formula milk for infants and the like (see Non-patent Document 1, for example). Sialyllactose is also known to have an inhibitory effect on HIV infection/proliferation, and therefore its application in food products designed for inhibiting HIV infection/growth is also expected (see Patent Document 1, for example).
For industrially producing a sialyllactose material, the whey obtained during production of cheese may be an effective source material because its non-protein nitrogenous compound fraction contains sialyllactose.
A method that separates and collects sialic acid compounds from milk or whey on an industrial scale by using a simulated moving bed (SMB) chromatographic separator (see Patent Document 2, for example), and a method that separates sialic acid compounds from milk or whey by using an ion-exchange resin (see Patent Document 3, for example) have been disclosed.

### RELATED-ART DOCUMENTS

### PATENT DOCUMENTS

Patent Document 1: JP-A-2006-117597
Patent Document 2: JP-A-H08-252403
Patent Document 3: JP-A-H11-180993

### NON-PATENT DOCUMENT

Non-patent Document 1: Shokuhin To Kaihatsu, Vol. 30, pp. 10 to 13

### SUMMARY OF THE INVENTION

### PROBLEMS TO BE SOLVED BY THE INVENTION

The method that uses a simulated moving bed (SMB) chromatographic separator (Patent Document 2) requires a pretreatment involving a step of removing proteins, and moreover, the method could become problematic due to the overly complicated operation conditions when simultaneously purifying sialic acid compounds having different separation factors, for example. Moreover, the method of Patent Document 2 is not suitable for a mass production purpose since large equipments would be needed to obtain a large amount of sialic acid compounds. The method that uses an ion-exchange resin (Patent Document 3) has difficulty when used on a large scale due to the poor chemical resistance and physical durability of the resin as well as to the large amount of regeneration effluent generated which is undesirable in the view of the recent environmental concerns.
The present inventors conducted extensive research seeking a method that can separate a sialyllactose material by simpler equipments and simpler operation conditions. As a result, the inventors found that a sialyllactose material can be separated by a method that simply comprises adjusting the treatment pH and exploiting the interactions between whey proteins and sialyllactose. Moreover, a use of an ultrafiltration (UF) membrane may reduce the amount of regeneration effluent as compared to the method that uses a resin. The above findings have led to the completion of the invention. Thus, an object of the present invention is to provide a method of separating a sialyllactose material from a milk material by utilizing the interactions between whey proteins and sialyllactose, and to provide food, beverages, and the like that comprise the resulting sialyllactose material.

### MEANS FOR SOLVING THE PROBLEMS

Thus, the present invention comprises the following.
(1) A method of separating a sialyllactose material comprising concentrating a milk material at a pH of 5.2 or lower to obtain a concentrate, adjusting a pH of the concentrate to 5.5 or higher, and obtaining a low-molecular-weight fraction from the pH-adjusted concentrate.
(2) A method of separating a sialyllactose material comprising: adjusting a pH of a milk material to 5.2 or lower; concentrating the pH-adjusted milk material by an ultrafiltration (UF) membrane to obtain a concentrate; adjusting a pH of the concentrate to 5.5 or higher; and passing the pH-adjusted concentrate through an ultrafiltration (UF) membrane.
(3) A sialyllactose material obtainable by a process comprising concentrating a milk material at a pH of 5.2 or lower to obtain a concentrate, adjusting a pH of the concentrate to 5.5 or higher, and obtaining a low-molecular-weight fraction from the pH-adjusted concentrate.
(4) A processed food comprising the sialyllactose material according to (3).
(5) A processed food comprising 0.1 to 90 g of the sialyllactose material according to (3) per 100 g of the processed food.
(6) A formula milk comprising the sialyllactose material according to (3).
(7) A formula milk comprising 0.1 to 30 g of the sialyllactose material according to (3) per 100 g of the formula milk.

### EFFECTS OF THE INVENTION

The method according to the present invention can separate a sialyllactose material from a milk material such as whey through easy operations.
Since the method also allows separation of sialyllactose from lactose and minerals, sialyllactose can be obtained with high purity. Therefore, the resulting sialyllactose material is highly useful for food, pharmaceutical, and other applications.

### DESCRIPTION OF EXEMPLARY EMBODIMENTS

Examples of the milk material used as the raw material include raw milk, skim milk, and cheese whey that are obtained from the milk of a mammal such as cow milk, goat milk, sheep milk, camel milk and horse milk, a liquid obtained by passing skim milk or whey through a microfiltration (MF) membrane, and the like. It is preferable to use a milk material that retains non-denatured whey proteins, such as a milk material that has been sterilized at a high temperature for a short period of time (e.g., at 72 to 75°C for 15 seconds), and more preferably a milk material that has been sterilized by using an MF membrane having a pore size of about 0.8 to 1.4 µm or a milk material that has not been heated. Two or more of the above-mentioned raw materials may also be used in combination. If the milk material contains casein proteins, the casein proteins are preferably removed from the milk material in advance by acid precipitation or filtration using an MF membrane having a pore size of 0.1 µm, for example, in order to improve the efficiency of the subsequent membrane treatments.
One gram of non-denatured whey proteins can adsorb 1.5 mg or more of sialyllactose at a pH equal to or lower than the isoelectric point of the whey proteins. Thus, an amount of non-denatured whey proteins that is sufficient to accommodate the sialyllactose contained in the milk material would be needed.

Since a milk material contains minerals, lactose, and the like, their removal becomes an issue when high purity of sialyllactose is desired in the manufacture of a sialyllactose material from a milk material.
To address this issue, the inventors focused on a treatment process that exploits the interactions between whey proteins and sialyllactose. First, by adjusting the pH to 5.2 or lower (i.e. a pH equal to or lower than the isoelectric point of the whey proteins), the surface of the whey proteins becomes positively charged, which induces their electrical binding to the negatively-charged sialyllactose. Thus, when whey proteins are subsequently concentrated, sialyllactose may also be concentrated. Sialyllactose can then be removed from the whey proteins efficiently by adjusting the pH to 5.5 or higher (i.e., a pH equal to or higher than the isoelectric point of the whey proteins) to release the said binding.

In the method according to the present invention, the adjustment of the pH of the milk material is very important.
Since the method utilizes the electrical charges of the whey proteins, the milk material to be used should contain non-denatured whey proteins.
The said milk material is first treated under an acidic condition.
Specifically, an acidic condition, i.e. pH 5.2 or lower, which is equal to or lower than the isoelectric point of the whey proteins, is brought about by using an acid solution. Examples of the acid solution used for this purpose include, but are not limited to, hydrochloric acid, citric acid, and the like. If the sample is to be concentrated later by a membrane, the pH is preferably adjusted to 2.0 to 5.2 in the view of the acid resistance property of the membrane. Since the optimum pH may vary depending on the properties of the whey proteins contained in the particular milk material solutions, the pH needs to be adjusted as appropriate.
The acidic condition may also be achieved by a resin treatment to avoid an increase in the amount of minerals.

The sample that has been subjected to the acidic treatment may be concentrated by a commonly known concentrating process such as resin treatment and freeze-drying in order to increase the purity of sialyllactose in the target sialyllactose material. In particular, the sample can be easily and efficiently concentrated to high purity by using an ultrafiltration (UF) membrane. It is preferable to use a UF membrane having a molecular weight cutoff of 10 kDa or lower so that the whey proteins are prevented from passing through. Examples of the UF membrane that may be used include HFK131 (manufactured by KOCH Membrane Systems Inc.), PW membrane (manufactured by GE Osmonics), and the like. This step can remove lactose and minerals from the sample.
An additional diafiltration (DF) step may be effective for further removing lactose and minerals to increase the purity of sialyllactose.
Any other methods capable of concentrating and/or separating whey proteins may be used, such as a resin treatment.

After performing the above treatment under an acidic condition, the pH of the sample is adjusted to 5.5 or higher (which is equal to or higher than the isoelectric point of the whey proteins) using a basic solution, preferably to 5.5 to 11.0 in the view of the alkali resistance property of a membrane. Examples of the basic solution used for this purpose include, but are not limited to, sodium hydroxide and the like.

The sample may then be subjected to any of the commonly known fractionation processes such as resin treatment and freeze-drying in order to increase the purity of sialyllactose in the target sialyllactose material. In particular, fractionation to high purity may be easily and efficiently achieved by using an ultrafiltration (UF) membrane. A UF membrane having a molecular weight cutoff that can retain whey proteins but allow sialyllactose to pass through (e.g., a molecular cutoff of 10 kDa or lower) may be used. The membrane used in this step may be of the same type as the one used in the concentration step, and the examples include HFK131 (manufactured by KOCH Membrane Systems Inc.), PW membrane (manufactured by GE Osmonics) and the like. By the present step, a low-molecular-weight fraction comprising sialyllactose may be collected as the flow-through (pass-through) liquid.
For further increasing the purity of sialyllactose in the sialyllactose material, a DF treatment would be effective.
If the pH of the concentrate has been adjusted to 5.5 or higher by using a basic solution, the said flow-through liquid would retain the minerals. Thus, desalting by an additional nanofiltration (NF) membrane treatment may be performed, to increase the sialyllactose content per solid weight and obtain a high-purity sialyllactose material. The resulting sialyllactose material is highly useful for food, pharmaceutical, and other applications.

The sialyllactose material thus obtained may be incorporated into food products such as processed foods and formula milk, pharmaceutical products, animal feed, and the like.
Examples of the processed foods include those that comprise sugar, glucose, malt sugar, cornstarch, dextrin, sugar alcohol, lactose, or the like as a main ingredient. The processed food may comprise 0.1 to 90 g of the sialyllactose material per 100 g of the processed food. The processed food may take any form such as solid, semi-solid, and liquid, and it may also be in a tablet form. In the above, the lower limit of the sialyllactose material content is said to be 0.1 g per 100 g of the processed food; this is because this concentration is equivalent to the sialyllactose content of the human milk (breast milk) (in terms of solid mass), and if the processed food contains less than 0.1 g of the sialyllactose material per 100 g, the presence of the sialyllactose may be less meaningful, or no significant effect of the sialyllactose material may be obtained.
Examples of the formula milk include formula milk for infants, formula milk for low-birth-weight infants, follow-up milk, formula milk for infants having allergy diseases, and the like. The formula milk may contain 0.1 to 30 g of the sialyllactose material per 100 g of the formula milk. This is because a predominant component of the sialyllactose material is lactose and therefore addition of more than 30 g of the sialyllactose material per 100 g of the product is difficult given the compositional requirement on the formula milk. The lower limit of the sialyllactose material content is said to be 0.1 g per 100 g of the formula milk because this concentration is equivalent to the sialyllactose content of the human milk (breast milk) (in terms of solid mass). If the formula milk contains less than 0.1 g of the sialyllactose material per 100 g, the presence of the sialyllactose may be less meaningful, or no significant effect of the sialyllactose may be obtained.

The invention is further described below by examples. The following examples are given for illustrative purposes, and should not be construed as limiting the invention.

### [Test Example 1]

### Interaction between whey proteins and sialyllactose achieved by a pH adjustment

The interaction between whey proteins and sialyllactose was investigated under various pH conditions.
WPC 80 comprising denatured whey proteins ("Lacprodan 80" manufactured by Arla Foods amba.), non-denatured α-la material (manufactured by Anchor), and non-denatured β-1g material (manufactured by Anchor) were used as the starting milk materials. 5 mg of sialyllactose was added to each milk material, and the pH was adjusted by using 0.5N sodium hydroxide or 1N hydrochloric acid. The sample was then treated with a UF membrane having a molecular weight cutoff of 10 kDa ("CENTRIPLUS YM-10" manufactured by Millipore) at 25°C and at 2400 G for 80 minutes. The sialyllactose concentration in the flow-through liquid was measured by high-performance liquid chromatography (HPLC).
An HPLC system "DX500" (manufactured by DIONEX) and a "CarboPac PA1" column were used for the measurement. A solution consisting of 90% of 100 mM sodium hydroxide and 10% of 600 mM sodium acetate/100 mM sodium hydroxide was used as the mobile phase, and the flow rate was 1 ml/min.

The results are shown in Table 1. The amount of sialyllactose adsorbed on the proteins was calculated by subtracting the amount of sialyllactose contained in the flow-through of the 10 kDa cutoff UF membrane from the amount of sialyllactose initially added to the milk material.
Using non-denatured α-1a and β-1g, it was confirmed that sialyllactose became specifically adsorbed on the whey proteins when the pH had been adjusted to 5.2 or lower (i.e., equal to or lower than the isoelectric point of the whey proteins). It was also confirmed that larger amounts of sialyllactose were adsorbed on the proteins under increasingly lower pH, and that 1.5 mg or more sialyllactose could be adsorbed on 1 g of the proteins at a pH equal to or lower than the isoelectric point of the proteins.
On the other hand, when WPC 80 comprising denatured whey proteins was used, no significant change in the amount of adsorbed sialyllactose was observed at any pH.

**[TABLE 1]**

| Sample Name | Adjusted pH [-] | Amount of sialyllactose per proteins [mg/g] |
|---|---|---|
| WPC80+ sialyllactose material | 9.2 | 1. 27 |
| | 6. 4 (not adjusted) | 1. 40 |
| | 5.5 | 1.47 |
| | 3.5 | 1. 55 |
| α-1a+ sialyllactose material | 9.1 | 0.24 |
| | 6.5 (not adjusted) | 0.68 |
| | 5.7 | 1.12 |
| | 3.6 | 2.39 |
| | 2.2 | 4.04 |
| β-1g+ sialyllactose material | 9.1 | 1. 28 |
| | 5. 9 (not adjusted) | 1.11 |
| | 5.2 | 1. 67 |
| | 3.6 | 3.06 |
| | 2. 1 | 4.34 |

### [Example 1]

### Separation of sialyllactose material

150 kg of unsterilized skim milk was heated to 70°C, and then cooled to 50°C. This skim milk contained 0.03% sialyllactose based on the solid weight. The skim milk was sterilized at 50°C by using an MF membrane having a pore size of 1.4 µm ("Membralox" manufactured by Pall Corporation). The sterilized skim milk was concentrated to volume concentration factor 3.6 by using an MF membrane having a pore size of 0.1 µm ("T11" manufactured by NGK) to obtain an MF membrane flow-through liquid containing non-denatured whey proteins. This flow-through liquid was acidified by using a weakly acidic cation-exchange resin ("WK-40" manufactured by Mitsubishi Chemical Corp.) to obtain 107 kg of a solution having a pH of 2.8. The sialyllactose content in this solution was 6.9 mg/100 ml.
The solution was then concentrated to volume concentration factor 25 by using a UF membrane having a molecular weight cutoff of 10 kDa ("PW1812T" manufactured by GE Osmonics) to obtain an acidic concentrate. The pH of the acidic concentrate was adjusted to 7.0 by adding 1N sodium hydroxide. The sample was then diafiltrated to 3.2-fold by using a UP membrane having a molecular weight cutoff of 10 kDa to obtain 13 kg of a flow-through liquid containing sialyllactose.
This flow-through liquid was concentrated, desalted, and further diafiltrated by using NF membranes ("Desal-5" and "DK1812" manufactured by GE Osmonics) to obtain 3.0 kg of a sialyllactose-enriched material.

The composition of the obtained sialyllactose material is shown in Table 2. This method was able to prepare a sialyllactose material having a sialyllactose content of 1% or more based on the solid weight.

**[TABLE 2]**

| | | |
|---|---|---|
| solids | **%** | **94.5** |
| fats | **%** | - |
| proteins | **%** | 7.7 |
| minerals | **%** | 21.9 |
| **Na** | **mg%** | 8000 |
| **K** | **mg%** | 780 |
| **Ca** | **mg%** | 85 |
| **Mg** | **mg%** | 168 |
| **P** | **mg%** | 1810 |
| **Cl** | **mg%** | 31 |
| lactic acid | **mg%** | 6.7 |
| citric acid | **mg%** | 12000 |
| phosphoric acid | **mg%** | - |
| ulfuric acid | **mg%** | - |
| nitric acid | **mg%** | - |
| sialyllactose | **mg%** | **1040** |

### [Example 2]

Whey powder, skim milk, concentrated-protein whey powder, butter milk, and whole milk powder (all manufactured by Snow Brand Milk Products Co., Ltd.) were mixed in the amounts shown in Table 3 to obtain a solution. Casein (manufactured by Fonterra Ltd.), a milk serum protein concentrate (manufactured by Fonterra Ltd.), vitamins (manufactured by BASF), and minerals (manufactured by Komatsuya Corporation) were added to the solution, and further, the sialyllactose material produced in Example 1 was added, and other minor components were added. After the addition of an oil-fat mixture (manufactured by Ueda Oils And Fats Mfg Co., Ltd.), the mixture was mixed, sterilized, and spray-dried to obtain a sialyllactose-fortified formula milk for infants.
Since the resulting formula milk is fortified with sialyllactose, the formula milk provides protective effects against viral and bacterial infections, as well as effects of facilitating various physiological activities such as a growth-promoting activity for lactic acid bacteria.

**[TABLE 3]**

| | |
|---|---|
| Whey powder, powdered skim milk, concentrated- protein whey powder, butter milk, whole milk powder | **58.8 (%)** |
| | |
| Casein | **2.0** |
| Milk serum protein concentrate | **1.0** |
| Oil and fat mixture | **27.0** |
| Sialyllactose material | **10.0** |
| Minerals | **1.0** |
| Vitamins | **0.1** |
| Other minor components | **0.1** |

### [Example 3]

Glucose (manufactured by San-ei Sucrochemical Co., Ltd.), a sucrose ester (manufactured by Mitsubishi-Kagaku Foods Corporation), crystalline cellulose (manufactured by Asahi Kasei Chemicals Corporation), and flavors (manufactured by Takasago International Corporation) were mixed in the amounts shown in Table 4. The sialyllactose material produced in Example 1 was added to the mixture to obtain a mixed powder. The mixed powder was directly formed into tablets at a pressure of 1 to 3 t to obtain 1 g of sialyllactose-containing tablets.
Since the resulting tablet is fortified with sialyllactose, it provides protective effects against viral and bacterial infections as well as effects of facilitating various physiological activities such as a growth-promoting activity for lactic acid bacteria.

**[TABLE 4]**

| | |
|---|---|
| Glucose | **50.0(%)** |
| Sialyllactose material | **40.0** |
| Sucrose ester | **1. 0** |
| Crystalline cellulose | **5.0** |
| Flavors | **1.0** |

## Claims

1. A method of separating a sialyllactose material comprising concentrating a milk material at a pH of 5.2 or lower to obtain a concentrate, adjusting a pH of the concentrate to 5.5 or higher, and obtaining a low-molecular-weight fraction from the pH-adjusted concentrate.

2. A method of separating a sialyllactose material comprising: adjusting a pH of a milk material to 5.2 or lower; concentrating the milk material by an ultrafiltration (UF) membrane to obtain a concentrate; adjusting a pH of the concentrate to 5.5 or higher, and obtaining a flow-through liquid by passing the pH-adjusted concentrate through an ultrafiltration (UF) membrane.

3. A sialyllactose material obtainable by a process comprising concentrating a milk material at a pH of 5.2 or lower to obtain a concentrate, adjusting a pH of the concentrate to 5.5 or higher, and obtaining a low-molecular-weight fraction from the pH-adjusted concentrate.

4. A processed food comprising the sialyllactose material according to claim 3.

5. A processed food comprising 0.1 to 90 g of the sialyllactose material according to claim 3 per 100 g of the processed food.

6. A formula milk comprising the sialyllactose material according to claim 3.

7. A formula milk comprising 0.1 to 30 g of the sialyllactose material according to claim 3 per 100 g of the formula milk.
